# EUROPEAN PATENT APPLICATION

(11) **EP 2 360 645 A2**
(43) Date of publication of application: **24.08.2011**
(21) Application number: 11152981.4
(22) Date of filing: 02.02.2011
(51) Int. Cl.: G06T 13/80

(54) **Method and apparatus for producing dynamic effect of character capable of interacting with image**

(30) Priority: 11.02.2010 KR 20100012845
(71) Applicant: Samsung Electronics Co., Ltd., Suwon-si, Gyeonggi-do 506-762 (KR)
(72) Inventor: Ahn, Hee-Bum, 442-742, Gyeonggi-do (KR); Kim, Hyun-Soo, 442-742, Gyeonggi-do (KR); Kwon, Mu-Sik, 442-742, Gyeonggi-do (KR); Oh, Sang-Wook, 442-742, Gyeonggi-do (KR); Lee, Dong-Hyuk, 442-742, Gyeonggi-do (KR); Hwang, Seong-Taek, 442-742, Gyeonggi-do (KR); Park, An-Na, 442-742, Gyeonggi-do (KR)
(74) Representative: Grünecker, Kinkeldey, Stockmair & Schwanhäusser Anwaltssozietät

(57) **Abstract**

A method for producing motion effects of a character capable of interacting with a background image in accordance with the characteristics of the background image is provided, including extracting the characteristics of the background image; determining a character to be provided with the motion effects in the background in accordance with the extracted characteristics of the background image; recognizing external signals including a user input; determining the motion of the character in accordance with the characteristics of the background image and the recognized external signals; and reproducing an animation for executing the motion of the character in the background image.

## Description

### BACKGROUND OF THE INVENTION

### 1. Field of the Invention

The present invention generally relates to animation editing, and more particularly, to a method and apparatus for producing a dynamic effect of a character in an image in accordance with the characteristics of the image.

### 2. Description of the Related Art

With flash-based animation editors currently provided by mobile devices, if a user wishes to include a character in an image so as to provide a motion effect, the user can select a background image and a character, and can input one or more predetermined motions or paths using a touch screen, along which the user can directly move the character, so as to set the motion of the character.

The above-mentioned character animation editing function is inconvenient in that the user must select a character suitable for a background, and must input multiple motion paths for moving the character, and the character animation editing function may provide merely a few predetermined limited motion effects. Additionally, when a character animation is stored, there is a disadvantage in that the user is always allowed to see only the same motion effect since the animation always repeats the same motion effect.

When an animation is edited in a mobile device, editing in the mobile device is inaccurate if a user unskilled in editing edits the motion of a character suitable for a background image using a touch screen which is very small compared to a screen of a personal computer. Therefore, if a user directly draws motion lines of a character through a touch screen of a mobile device, there is a limitation in that the motion of the character does not look natural.

### SUMMARY OF THE INVENTION

Accordingly, the present invention has been made to solve the above-mentioned problems occurring in the prior art, and the present invention provides a method and apparatus for automatically producing a dynamic effect of a character in an input image by analyzing the characteristics of the image.

In accordance with an aspect of the present invention, there is provided a method for producing a motion effect of a character capable of interacting with a background image in accordance with the characteristics of the background image, the method including extracting the characteristics of the background image; determining a character to be provided with a motion effect in the background image in accordance with the extracted characteristics of the background image; recognizing external signals including a user's input; determining the motion of the character in accordance with the characteristics of the background image and the recognized external signals; and reproducing an animation for executing the motion of the character in the background image.

The method may further include producing and reproducing the motion of the character in accordance with the external signals if the external signals are recognized while the animation is being reproduced.

The method may further include storing the reproduced animation.

In accordance with another aspect of the present invention, there is provided an apparatus for producing a motion effect of a character capable of interacting with a background image in accordance with the characteristics of the background image, the apparatus including an input unit for receiving a user input; a memory for storing the background image and a plurality of character information items; a control unit for extracting the characteristics of the background image, determining a character to be provided with a motion effect in the background image in accordance with the extracted characteristics of the background image, recognizing external signals including the user input, and determining the motion of the character in accordance with the characteristics of the background image and the recognized external signals; and an output unit for reproducing an animation for executing the motion of the character in the background image in accordance with the determined motion of the character.

### BRIEF DESCRIPTION OF THE DRAWINGS

The above and other aspects, characteristics and advantages of the present invention will be more apparent from the following detailed description taken in conjunction with the accompanying drawings, in which:
FIG. 1 illustrates a configuration of an apparatus for producing a dynamic effect of a character capable of interacting with a background in accordance with the characteristics of an image in accordance with an embodiment of the present invention;
FIG. 2 illustrates a configuration of an image interpretation unit in the apparatus for producing a dynamic effect of a character capable of interacting with a background in accordance with the characteristics of an image in accordance with an embodiment of the present invention;
FIG. 3 illustrates an example of an input image at the time of performing a process for producing a dynamic effect of a character capable of interacting with a background in accordance with the characteristics of an image in accordance with an embodiment of the present invention;
FIG. 4 illustrates an example of a spatial characteristic extracted from the image of FIG. 3, at the time of performing a process for producing a dynamic effect of a character capable of interacting with a background in accordance with the characteristics of an image in accordance with an embodiment of the present invention;
FIG. 5 illustrates an example of an interpretation of the characteristics of an image, at the time of performing a process for producing a dynamic effect of a character capable of interacting with a background in accordance with the characteristics of an image in accordance with an embodiment of the present invention;
FIG. 6 illustrates an example of a file format indicating characters, at the time of producing a dynamic effect of a character capable of interacting with a background in accordance with the characteristics of an image in accordance with an embodiment of the present invention;
FIG. 7 illustrates an example of a dynamic effect of a character produced in accordance with the spatial characteristic of the image of FIG. 3, at the time of performing a process for producing a dynamic effect of a character capable of interacting with a background in accordance with the characteristics of an image in accordance with an embodiment of the present invention; and
FIG. 8 is a flowchart illustrating a process for producing a dynamic effect of a character capable of interacting with a background in accordance with the characteristics of an image in accordance with an embodiment of the present invention.

### DETAILED DESCRIPTION OF EMBODIMENTS OF THE PRESENT

### INVENTION

Hereinafter, embodiments of the present invention will be described with reference to the accompanying drawings. In the following description, various definitions in the following description are provided only to help with the general understanding of the present invention, and it would be apparent to those skilled in the art that the present invention can be implemented without such definitions. Further, in the following description of the present invention, a detailed description of known functions and configurations incorporated herein will be omitted when it may make the subject matter of the present invention rather unclear.

The present invention provides a method and apparatus for automatically producing a dynamic effect of a character in an image by analyzing the characteristics of an input image. In the present invention, the term "character" refers to an object expressed by a graphic or a photograph and performing a predetermined action (motion) in a background image.

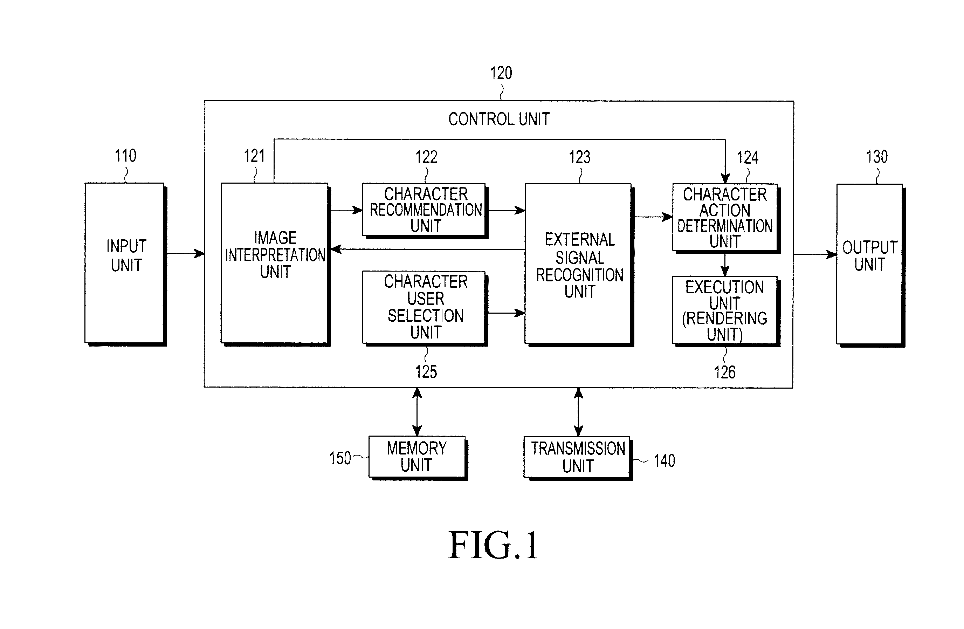

FIG. 1 illustrates a configuration of an apparatus for producing a dynamic effect of a character capable of interacting with a background in accordance with the characteristics of an image in accordance with an embodiment of the present invention.

The apparatus for producing a dynamic effect of a character capable of interacting with a background in accordance with the characteristics of an image includes: an input unit 110, an output unit 130, a memory unit 150, a transmission unit 140, and a control unit 120.

The input unit 110 may be implemented as a touch screen, a touch pad, a keypad or the like, and receives a user input. In accordance with an embodiment of the present invention, the input unit 110 receives an input for selecting a character displayed on a background image, wherein the input unit 110 may receive a user input for the character's reaction when a dynamic effect of the character included in the background image is produced.

The memory unit 150 stores information items required for operating the apparatus. In accordance with an embodiment of the present invention, the memory unit 150 stores a plurality of character information items and a previously input background image, wherein the memory unit 150 can store the final animation produced in accordance with the user selection at the time of producing the final animation provided with a dynamic effect of the character in accordance with the characteristics of the image.

The control unit 120 includes an image interpretation unit 121, a character recommendation unit 122, an external recognition unit 123, a character action determination unit 124, a character user selection unit 125, and an execution unit (a rendering unit) 126.

The image interpretation unit 121 analyzes an input image, and performs interpretation for the image. When a camera unit (not shown) is provided, the input image may be an image photographed by the camera unit, or an image previously stored in the apparatus.

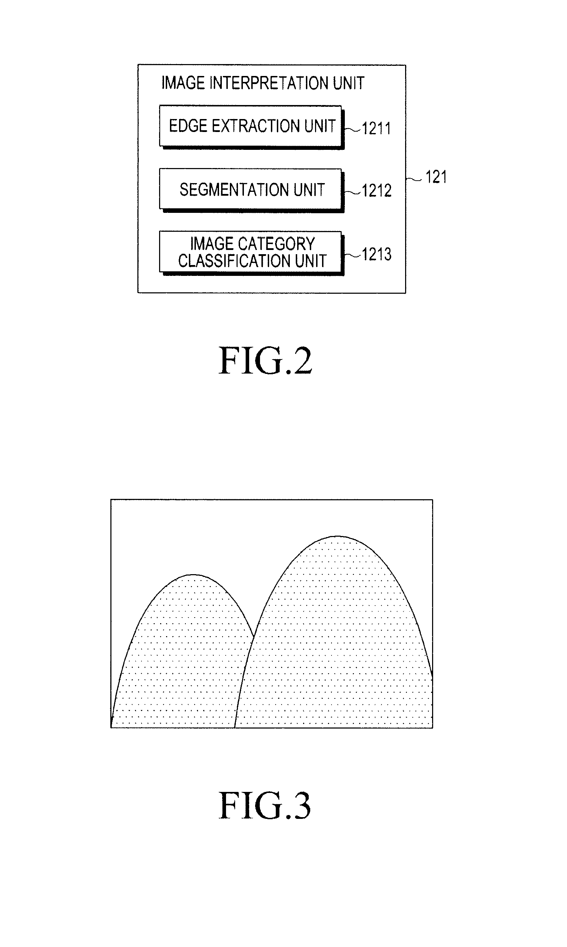

The image interpretation unit 121 extracts and transmits the characteristics of the input image to the character recommendation unit 122 and the character action determination unit 124, which will be described below. FIG. 2 illustrates a configuration of an image interpretation unit in the apparatus for producing a dynamic effect of a character capable of interacting with a background in accordance with the characteristics of an image in accordance with an embodiment of the present invention. As illustrated in FIG. 2, the image interpretation unit 121 may include an edge extraction unit 1211 for extracting edges of an input image, a segmentation unit 1212 for segmenting the image, and an image category classification unit 1213 for determining the categories of the segmented images.

Therefore, in order to extract the characteristics of a background image, the image interpretation unit 121 of FIG. 1 extracts edge information of the background image through the edge extraction unit 1211, segments the background image region through the segmentation unit 1212 in accordance with the extracted edge information, and classifies the categories of the segmented regions through the image category classification unit 1213.

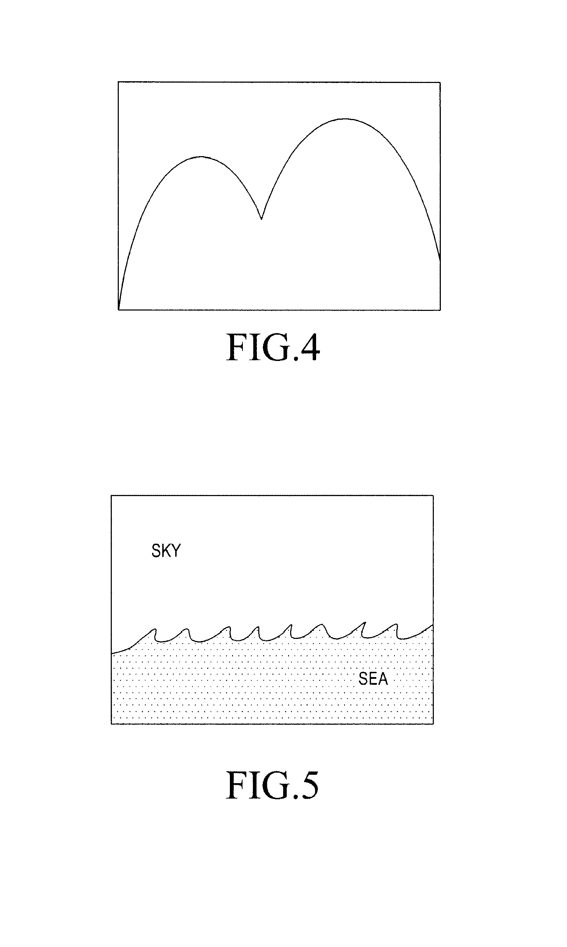

FIG. 3 illustrates an example of an input image at the time of performing a process for producing a dynamic effect of a character capable of interacting with a background in accordance with the characteristics of an image in accordance with an embodiment of the present invention. If an image as shown in FIG. 3 is input, the image interpretation unit 121 acquires information for a character's moving space through the interpretation of edge map information, using the edge extraction unit 1211. FIG. 4 illustrates an example of a spatial characteristic extracted from the image of FIG. 3, at the time of performing a process for producing a dynamic effect of a character capable of interacting with a background in accordance with the characteristics of an image in accordance with an embodiment of the present invention. The ideal result of extracting the edges from the image of FIG. 3 is shown in FIG. 4.

However, since the an image input through a camera includes a great number of edge information items, and the space in the input image is limited, it is necessary to simplify the image region by performing the segmentation of the region through the segmentation unit 1212. At this time, the segmentation may be conducted in accordance with the edge information items extracted by the edge extraction unit 1211. As a result, it is possible to extract relatively large regions or regions having strong edge information items among the various regions existing in a background image extracted in proportion to the complexity in the input image.

Additionally, the image interpretation unit 121 may classify segmented regions on the basis of various characteristic information items within the major regions of the input image through the image category classification unit 1213.

FIG. 5 illustrates an example of an interpretation of the characteristics of an image, at the time of performing a process for producing a dynamic effect of a character capable of interacting with a background in accordance with the characteristics of an image in accordance with an embodiment of the present invention. The present invention creates a database and stores characteristic information items in the memory unit 150, and classifies the categories of regions of interest identified by comparing them with the characteristic information items of the image. That is, the present invention segments the region of the input image, and classifies the categories of the segmented regions in accordance with the characteristics of the regions, such as colors of the regions, the shapes of edges of the regions, and the like. For example, referring to FIG. 5, by way of an example, in accordance with the characteristics of the regions, the top region may be classified as sky, and the lower region may be classified as sea. General characteristic information items for classifying the regions may be information items preset by the user as extensive concepts of an image scope interpretable by the image interpretation unit 121, or information items included in an image-based characteristic database created on the basis of previously defined characteristics.

The image category classification unit 1213 determines the categories of the current regions by comparing the characteristics previously stored in accordance with the categories of a plurality of regions, and the characteristics of the current regions, in order to classify the categories of the segmented regions.

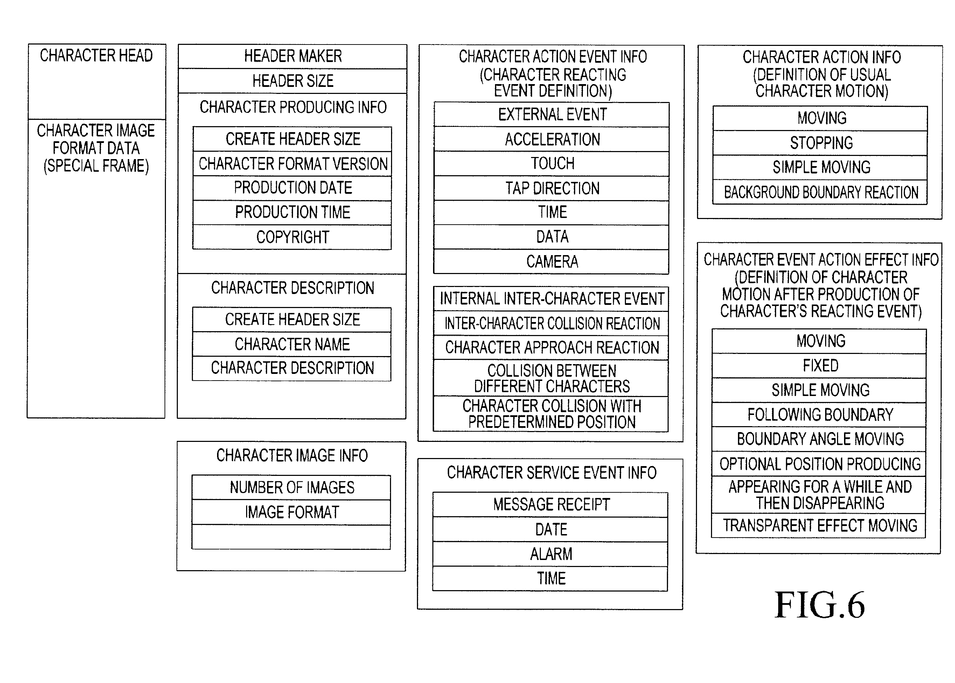

The character recommendation unit 122 determines and recommends a character suitable for the background image on the basis of the characteristic information items of the image obtained through the image interpretation unit 122. FIG. 6 illustrates an example of a file format indicating characters, at the time of producing a dynamic effect of a character capable of interacting with a background in accordance with the characteristics of an image in accordance with an embodiment of the present invention. As illustrated in FIG. 6, the information items for individual characters are previously stored in the memory unit 150 in a previously specified format. Meanwhile, when a camera (not shown) is provided in the apparatus, a character may be produced using the images directly photographed by the user or stored images. Additionally, it is possible to produce an animation capable of illustrating a motion effect of a character using these images and to store the animation to the character information items.

Referring to FIG. 6, the character action information defining the usual motions of a character includes set values for moving, stopping, simple moving, background boundary reaction.

The character action information defining the characters' reacting events includes set values for accelerating, touch, tap direction, specific time, specific weather, and camera input as external events, and includes set values for inter-character collision, character approach reaction, collision between different characters, and collision between a predetermined position and a character, as internal inter-character events.

The character event action effect information defining the characters' motions after the occurrence of a character's reacting event includes set values for moving, fixed, simple moving, following boundary, boundary angle moving, producing optional position, appearing for a while and then disappearing, and transparent effect moving.

Characters should have one or more set values from among the above-mentioned setting values, wherein if two or more set values are selected for a character, the character may randomly choose one among the selected set values and may act in accordance with the chosen set value.

The character information items as mentioned above allow a user to download a produced character through a communication network, such as the Internet, or to directly produce a character.

Although the user may directly select one or more predetermined characters when setting one or more characters to be included in a background image, the character recommendation unit 122 may determine and recommend characters suitable for the background image on the basis of characteristic information for the image extracted through the image interpretation unit 121, and provide the characters to the user. For example, if there is a region having information for an edge in an extracted background image, the character recommendation unit 122 may show a character movable along the edge, and if it is determined that there is sky in the space of the background image, the character recommendation unit 122 may present a sky-related character. Two or more characters may be simultaneously selected and displayed on a single background image.

The external signal recognition unit 123 transmits meaningful information items to the character action determination unit 124 to be described later, using various signals which can be obtained through equipped sensors or the like.

For example, the external signals may include a user input, and the external signals may be signals produced due to information items sensed by various sensors, such as a touch sensor, a weight sensor, a speed sensor, an illumination sensor, a microphone, and a camera, weather information, time information, message receipt, and e-mail receipt, wherein the external signals are converted into a message, an event, a notice, a notification or the like recognizable by an application, and then transmitted to the character action determination unit 124. Additionally, the external signal recognition unit 121 may also change the information of the background beyond character information. In such a case, the image interpretation unit 121 may process the effect of the background caused thereby. For example, if it is determined that it is nighttime on the basis of the time information, or that it is snowing on the basis of weather information, an animation effect may be provided to the background image in such a manner that the background is changed to a dark night background or a snow falling background.

The character action determination unit 124 determines the action of a character included in the image on the basis of characteristics extracted from the background image, the characteristics of the character and input signals. In sum, the motion of the character is determined autonomously in accordance with the characteristics of the background image. For example, if the background image contains many edges having highly complicated directivity and weak strength, the action of the character becomes slow, the radius of action is restricted, and the character dashes and rushes about, thereby increasing collisions with neighboring parts.

Additionally, if the background image contains many edges having less complicated directivity and strong strength, the character performs an action reflected from the part where the character collides against the background. Moreover, the character may be set to be located in a relatively wide region in the background image, and to perform an action suitable for the characteristics of the character positioned region.

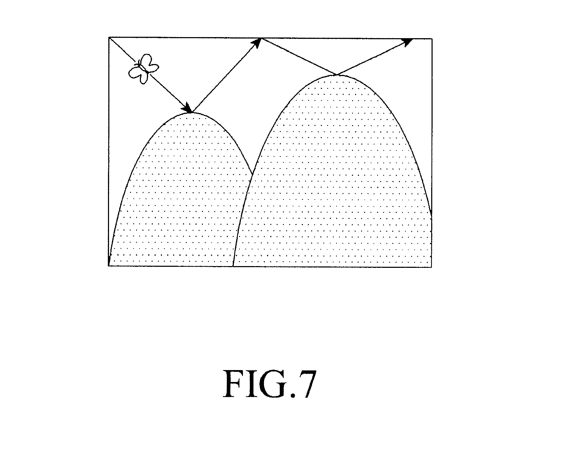

FIG. 7 illustrates an example of a dynamic effect of a character produced in accordance with the spatial characteristic of the image of FIG. 3, at the time of performing a process for producing a dynamic effect of a character capable of interacting with a background in accordance with the characteristics of an image in accordance with an embodiment of the present invention. For example, as illustrated in FIG. 7, a dynamic effect is provided in such a manner that a butterfly character positioned in the sky region flies around. Additionally, if a ship character is located in the sea region, the character may be set to move in accordance with the boundary (edge) information of the sea horizon.

Moreover, the character reacts in accordance with external signals transmitted from the external signal recognition unit 123. For example, if a user touch input is transmitted while the character is moving, the character's motion may be varied depending on the touch-input coordinate. For example, the character may move toward or away from the touch-input coordinate. Although such character actions may be set in detail for each character by the user, they are basically set in accordance with the generally set information items which are determined depending on the background and external signals. For example, if there is a butterfly character, as shown in FIG. 7, the character may move within an edge of a predetermined region in the space of the background image, and may also move in response to a user's touch input.

Calculation for determining the motion of each character is executed by applying random functions, and thus an animation in accordance with an embodiment of the present invention provides a different character motion effect to the user each time. That is, a method of determining a character's moving space, a method of selecting a character's moving space, and a starting position are determined at an optional point within a region each time a motion is produced. It is impossible for a user to physically designate the same starting position, and even if the same character moves in the same image, the same animation is never produced whenever the same motion effect is produced.

If a character reacts to information transmitted from the external signal recognition unit 123, for example, if a text message is received while the character animation is being executed, it is possible to inform the user that the text message is received through an effect, such as the character's blinking, and it is also possible to execute setting in such a manner that when the character is touched, specific information is displayed.

Finally, the execution unit 126 transmits an animation image produced by drawing characters' effects and motions to the output unit, wherein the effects and motions are determined by the character action determination unit 124 on the background.

The output unit 130 may be implemented as a touch screen, an LCD or the like, and outputs an image. In an embodiment of the present invention, the output unit 130 outputs visual results through a display unit by rendering an animation provided with a motion effect for the background and a character or characters. When the final animation is output, voice may be reproduced or an effect, such as vibration, may be produced.

The transmission unit 140 transmits the final animation produced to have a motion effect in accordance with the characteristics and sensed signals of the corresponding image to the outside.

The control unit 120 then produces the final animation including a motion effect for a character in accordance with the characteristics of a background image and one or more external signals, wherein the control unit 120 may store the final animation in the memory unit 150 or transmit the final animation to an external destination. The stored form produces a supported type format with reference to user profiles for formats supported by a terminal. The supported file formats include playing picture formats for providing an animation, such as ShockWaveFlash (SWF), Animated Graphics Interchange Format (GIF), Moving Picture Experts Group (MPEG), and H.264, and if a storage device does not have an animation viewer for reproducing an animation, the file formats may be stored in a JPEG format, which is an ordinary image format. Additionally, it is possible to select a suitable storage format by checking the stored volume. Since Animated GIF generally has disadvantages in that an image may be lost or its capacity may be increased, it is possible to select the storage format depending on the stored capacity.

Moreover, the control unit 120 determines initial parameters for moving a character at the time of producing an animation, and while the animation is being reduced, the control unit 120 renders the parameters for moving the character to be changed and renders the action or motion track of the character to be changed and output in accordance with the changed parameters. That is, when external signals are recognized while the animation is being reproduced, the control unit 120 produces and reproduces again the motion of the character in accordance with the external signals.

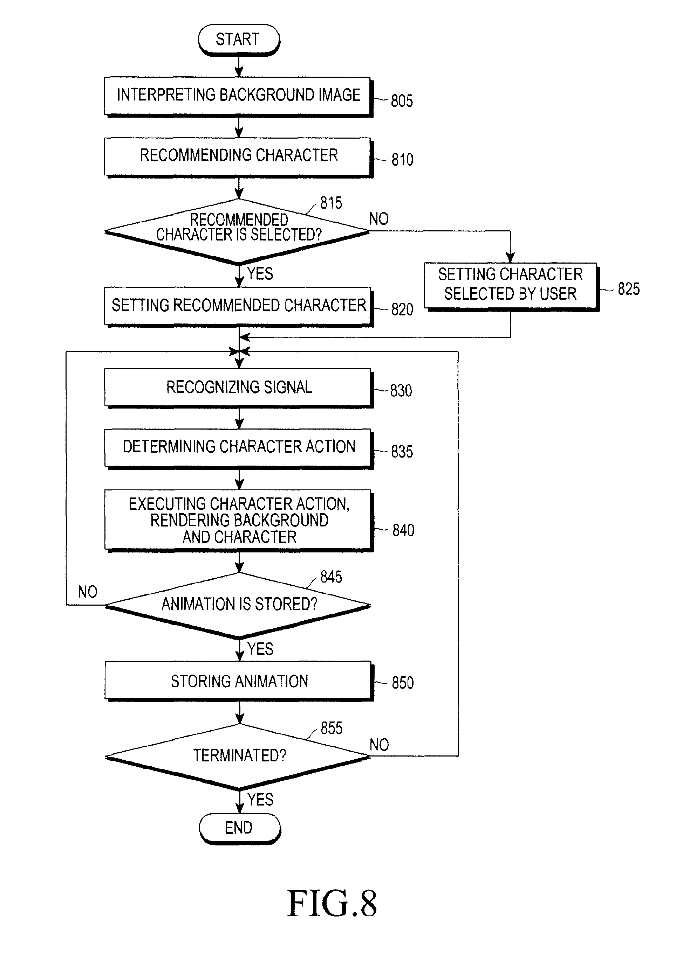

FIG. 8 is a flowchart illustrating a process for producing a dynamic effect of a character capable of interacting with a background in accordance with the characteristics of an image in accordance with an embodiment of the present invention.

Referring to FIG. 8, in accordance with the process for producing motion effects for a character, in step 805, an image interpretation unit 121 of a control unit 120 interprets an input background image. In such a case, the edges of the background image may be detected, the image is segmented in accordance with the complexity of the image, or the categories of the regions segmented from the image are determined on the basis of information previously stored in a data base.

Next, in step 810, a character recommendation unit 122 of the control unit 120 determines a recommended character in accordance with the characteristics of the image interpreted by the image interpretation unit 121, and provides the recommended character to a user through a display unit. In such a case, two or more characters may be recommended. Next, in step 815, the user determines whether to select the recommended character. If the user selects the recommended character, or selects one character among the recommended characters when multiple characters are recommended, the process proceeds to step 820, in which a step setting the selected recommended character is included in the background image.

If the user does not select the recommended character in step 815, the user may freely select another character from a character list, and the process proceeds to step 825, in which a step setting the character selected by the user is included in the background image.

In step 830, signals are recognized by one or more sensors equipped in an animation producing apparatus. In step 835, a character action determination unit 124 of FIG. 1 determines the action of the character on the basis of the characters of the background image interpreted in step 805, the characteristics of the selected character, and the recognized external signals.

In step 840, an execution unit 126 of FIG. 1 executes the character's action determined in step 830, and renders the background and the character, thereby executing an animation.

In step 845, it is determined whether to store the animation having the motion effects of the character. If it is determined not to store the animation in step 845, the process proceeds to step 830, in which step signal recognition is in stand-by status and the process for determining the character action is repeated. If it is determined to store the animation in step 845, the process proceeds to step 850, in which the animation is stored in a preset format, and then the process proceeds to step 855. In step 855, it is determined whether the process should be terminated, wherein if it is determined that the process should not be terminated, the process proceeds to step 830, and if it is determined that the process should be terminated, the entire process is terminated.

In accordance with the present invention, an image, a photograph or a picture can be interpreted for animation effects, a suitable character is recommended, and motion effects of the character are automatically produced, whereby the invention allows a user to make an easy and efficient animation.

Additionally, in accordance with the present invention, content having different animation effects, rather than content having the same effects, can be produced each time when such content are made, so that the user receives a different impression each time when the user reproduces and watches the produced content, and the content can be produced in a format to be capable of being transmitted like a background image of a mobile communication device, such as a portable phone or a smart phone, whereby various animation content can be provided to the user.

In accordance with the present invention, a vivid animation effect is given to a still image or a simple moving picture, using a character, whereby the user's emotion can be evoked through an autonomous action of a character, an inter-character interaction, the change of a character in accordance with a background, and an interaction between a character and the user.

Moreover, a novel user application can be provided, using an animation producing method through the combination of the image recognition, the understanding of characteristics of an image, and a character's artificial intelligence.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A method for producing a motion effect of a character capable of interacting with a background image in accordance with characteristics of the background image, the method comprising:
extracting the characteristics of the background image;
determining a character to be provided with a motion effect in the background image in accordance with the extracted characteristics of the background image;
recognizing external signals including a user input;
determining a motion of the character in accordance with the characteristics of the background image and the recognized external signals; and
reproducing an animation for executing the motion of the character in the background image.

2. The method of claim 1, further comprising:
producing and reproducing the motion of the character in accordance with the external signals if the external signals are recognized while the animation is being reproduced.

3. The method of claim 1, wherein extracting the characteristics of the background image comprises:
extracting edge information of the background image;
segmenting the background image region in accordance with the extracted edge information; and
classifying the categories of the segmented regions.

4. The method of claim 3, wherein, in classifying the categories of the segmented regions, a category of a corresponding region is determined by comparing the characteristics stored according to the categories of multiple regions with the current characteristics of the corresponding region in advance.

5. The method of claim 4, wherein, in determining the character to be provided with the motion effect in the background image in accordance with the extracted characteristics of the background image, a character previously defined in accordance with the categories of the regions of the background image is determined as the character to be provided with the motion effect if the previously defined character exists.

6. The method of claim 1, wherein external signals are signals input from at least one of a touch sensor, a weight sensor, an acceleration sensor, an illumination sensor, a microphone, and a camera, or signals produced due to at least one of weather information, time information, message receipt and e-mail receipt.

7. The method of claim 1, wherein determining the motion of the character in accordance with the characteristics of the background image and the recognized external signals comprises:
determining the motion of the character in accordance with the usual motion information of the character stored in the character information in accordance with the characteristics of the background image and the recognized external signals; and
determining that at least one of reaction information items for the events stored in the character information is executed when at least one of the events is produced, to which the character stored in the character information reacts, in accordance with the external signals.

8. The method of claim 1, further comprising:
storing the reproduced animation.

9. An apparatus for producing a motion effect of a character capable of interacting with a background image in accordance with characteristics of the background image, the apparatus comprising:
an input unit for receiving a user input;
a memory for storing the background image and a plurality of character information items;
a control unit for extracting the characteristics of the background image, determining a character to be provided with a motion effect in the background image in accordance with the extracted characteristics of the background image, recognizing external signals including the user input, and determining a motion of the character in accordance with the characteristics of the background image and the recognized external signals; and
an output unit for reproducing an animation for executing the motion of the character in the background image in accordance with the determined motion of the character.

10. The apparatus of claim 9, wherein the control unit produces and reproduces the motion of the character in accordance with the external signals if the external signals are recognized while the animation is being reproduced.

11. The apparatus of claim 9, wherein when extracting the characteristics of the background image, the control unit extracts edge information of the background image, segments the background image region in accordance with the extracted edge information, and classifies the categories of the segmented regions, and
wherein the classifying the categories of the segmented regions includes determining a category of a corresponding region by comparing the characteristics stored in accordance with the categories of two or more regions, and the current characteristics of the corresponding region in advance.

12. The apparatus of claim 11, wherein determining the character to be provided with the motion effects in the background image in accordance with the extracted characteristics of the background image comprises:
determining a character previously defined in accordance with the categories of the regions of the background image as the character to be provided with the motion effect if the previously defined character exists.

13. The apparatus of claim 9, wherein the external signals are signals input from at least one of a touch sensor, a weight sensor, an acceleration sensor, an illumination sensor, a microphone, and a camera, or signals produced due to at least one of weather information, time information, message receipt, and e-mail receipt.

14. The apparatus of claim 9, wherein determining the motion of the character in accordance with the characteristics of the background image and the recognized external signals comprises:
determining the motion of the character in accordance with the usual motion information of the character stored in the character information in accordance with the characteristics of the background image and the recognized external signals; and
determining that at least one of reaction information items for the events stored in the character information is executed when at least one of the events is produced, to which the character stored in the character information reacts, in accordance with the external signals.

15. The apparatus of claim 9, wherein the control unit stores the reproduced animation in the memory unit.
